# EUROPEAN PATENT APPLICATION

(11) **EP 4 796 472 A1**
(43) Date of publication of application: **26.08.2026**
(21) Application number: 26158863.6
(22) Date of filing: 16.02.2026
(51) Int. Cl.: B65G 51/06, B65G 51/28, B65G 65/00, B65G 51/30, B25J 15/00

(54) **SYSTEM AND PROCESS FOR TRANSPORTING AND AUTOMATED HANDLING OF TEST TUBES CONTAINING BIOLOGICAL SAMPLES**

(30) Priority: 25.02.2025 IT 202500003735
(71) Applicant: Inpeco SA, 6883 Novazzano (CH)
(72) Inventor: PEDRAZZINI, Gianandrea, CH-6883 Novazzano (CH); TRIUNFO, Riccardo, CH-6883 Novazzano (CH); DIDERO, Claudio, CH-6883 Novazzano (CH); GALBIATI, Lorenzo, CH-6883 Novazzano (CH)
(74) Representative: Buzzi, Notaro & Antonielli d'Oulx S.p.A.

(57) **Abstract**

A system (1) for pneumatic transport and automated handling of test tubes (T) containing biological samples comprises one or more pneumatic transport tubes (10), a plurality of carriers (2), configured to be pneumatically transported within pneumatic transport tubes (10), and one or more arrival/departure stations (8), each connected to a pneumatic transport tube (10), for loading and/or unloading test tubes (T) containing biological samples. Each carrier (2) is in the form of a hollow capsule and is provided with a door (3) which can be opened in an automated way for access to the inner chamber of the carrier (2). Each arrival/departure station (8) has a tubular structure (8A) with a station door (8B) which can be moved in an automated way, together with the door (3) of a carrier (2) reaching the station (8), for access to the inner chamber of the carrier (2). Each carrier (2) can receive at least one test tube rack (4) having a plurality of locations (6), configured to removably receive and hold a plurality of test tubes (T). The system (1) further comprises an interface station (11), interposed between at least one of the arrival/departure stations (8) and an automated line (9) for transporting test tubes (T) or a sample processing unit. At least one electronically controlled automated manipulator (R) provides for transferring test tubes between the automated transport line (9), or the sample processing unit, and test tube racks (4) arranged at the interface station (11). The manipulator (R) further provides for transferring test tube racks (4) between the inner chamber of a carrier (2), reaching the arrival/departure station (8), and a support surface (11B) of the interface station (11).

## Description

### Field of the invention

The present invention concerns a system and process for transporting and automated handling of test tubes containing biological samples, of the type comprising:
- one or more pneumatic transport tubes,
- a plurality of carriers, configured to be pneumatically transported within pneumatic transport tubes, and
- one or more arrival/departure stations of carriers, each connected to a pneumatic transport tube, for loading and/or unloading test tubes containing biological samples.

### Prior art

Systems for the pneumatic transport of test tubes containing biological samples (i.e. blood and urine), intended to be processed in analysis laboratories, have already been proposed and used in the past. Solutions of this type are described, for example, in documents US 6 062 398, WO 2014/081283 A1, US 10 562 719 B2, US 6 173 212, EP 3 483 612 A1.

However, to the knowledge of the Applicant, none of the solutions proposed so far has effectively solved the problem of pneumatically transporting and handling in a fully automated way, in an analysis laboratory, test tubes containing biological samples.

The achievement of this target involves, indeed, the solution of a series of problems. First of all, it is necessary to ensure that the transport and handling of the test tubes containing the biological samples are carried out without any risk of damage to the test tubes or loss, even partial, of their content. Then, it is desirable to identify highly flexible solutions, able to be adapted to the specific configuration of any analysis laboratory, allowing the handling of the test tubes containing biological samples, for example from a collection center, where the test tubes with samples are prepared, to one or more automated lines for the transport of the test tubes containing samples, and/or to one or more units for the processing of the samples, possibly also arranged on different floors in a laboratory structure.

Another problem to be solved is that of allowing a high-speed transport of the test tubes containing samples without, however, submitting the test tubes to excessively high decelerations or accelerations, so as to eliminate any risk of loss, even partial, of the content of the test tubes. Finally, there is the need to implement systems that guarantee in a complete and accurate way the permanent traceability of the samples, through continuous monitoring of the position of each test tube containing a sample, to which unique identification data are associated.

A pneumatic transport system of carriers containing histological samples, for example usable in anatomical pathology laboratories, has been proposed by the Applicant in document EP 4 151 568 B1.

### Object of the invention

The object of the present invention is to implement a system and a process for transporting and automated handling of test tubes containing biological samples, which allow to optimally solve all the aforementioned problems.

In particular, one object of the invention is to implement a system and a process for transporting and handling test tubes containing biological samples in a fully automated way, between different workstations of an analysis laboratory, ensuring, at the same time, a fast transport of the test tubes and an absolute safety against the risk of damage to the test tubes themselves or loss, even partial, of their content.

A further object of the invention is to implement a system of the type indicated above having a high flexibility, and being therefore adaptable in a simple and quick way to different applications and different laboratory configurations.

A further object of the invention is to implement a system of the type indicated above in which a complete and constant traceability of each test tube, and therefore of each biological sample, is guaranteed during processing.

Finally, a further object of the invention is to achieve all the aforementioned targets with relatively simple and low cost means.

### Summary of the invention

In view of achieving one or more of the aforementioned objects, the invention relates to a system for transporting and handling test tubes containing biological samples, comprising:
- one or more pneumatic transport tubes,
- a plurality of carriers, configured to be pneumatically transported within pneumatic transport tubes, and
- one or more arrival/departure stations of carriers, each connected to a pneumatic transport tube, for loading and/or unloading test tubes containing biological samples,

said system being characterized in that:
   - each carrier is in the form of a substantially cylindrical hollow capsule, having an internal chamber for transporting test tubes containing biological samples and a door of the carrier with a hinge axis parallel to the main axis of the carrier, movable in an automated way between a closed position, for transporting test tubes containing biological samples through the pneumatic transport tubes, and an open position, for loading and/or unloading test tubes containing biological samples into/from the arrival/departure station,
   - each arrival/departure station has a tubular structure coaxially connected to said pneumatic transport tube and arranged to receive a carrier arriving or departing from the station, wherein the tubular structure of the station has a station door which can be moved in an automated way between a closed position and an open position, for access to the inner chamber of a carrier arranged in the station and having the door of the carrier open,
   - each carrier is associated with at least one test tube rack having a plurality of locations, each configured to removably receive and hold a test tube,
   - the test tube rack and the inner chamber of the carrier have mutually engaging surfaces, configured to allow the test tube rack to be removably received and held within the inner chamber of the carrier,
said system further comprising:
   - an interface station between at least one of said arrival/departure stations and an automated line for transporting test tubes or a sample processing unit, said interface station being configured to support at specified positions one or more test tube racks, and
   - at least one electronically controlled automated manipulator, arranged adjacent to said at least one arrival/departure station and to said interface station and configured and programmed to:
      - transfer one or more test tubes from said automated transport line, or from said sample processing unit, to respective locations of a test tube rack arranged at said interface station,
      - pick up a test tube rack from said interface station, after at least one of the locations of the test tube rack has been filled with a test tube, and
      - load the test tube rack, with the test tubes carried by it, into the inner chamber of a carrier reaching the arrival/departure station, after the station door and the door of the carrier have both been opened,
      said at least one electronically controlled automated manipulator being also configured and programmed to:
      - pick up a test tube rack from a carrier reaching the arrival/departure station, after the station door and the door of the carrier have both been opened,
      - place the test tube rack thus picked up in a determined position in said interface station, and
      - transfer test tubes from respective locations within the test tube rack, which has been placed in said interface station, to said automated transport line or said sample processing unit.

As it is evident, thanks to the above features, the system according to the invention allows a completely automated handling of the test tubes containing the biological samples in the passage between the arrival/departure station of the pneumatic transport system and the automated line for the transport of the test tubes or any unit for the processing of the samples, which is part of the analysis laboratory and is intended to the processing of the samples contained in the test tubes.

In a preferred embodiment, each test tube rack has an upper surface, a lower surface and a perimeter side surface. The test tube locations are cavities extending from the upper surface and are each provided with elastic retaining devices configured to removably hold a test tube. The perimeter side surface of each test tube rack is configured to allow grasping of said test tube rack by a grasping device carried by said at least one automated manipulator.

Still with reference to the preferred embodiment, each arrival/departure station has said tubular structure which is vertically oriented. In order to ensure that each carrier can be oriented to arrive at an arrival/departure station with the test tubes facing upwards, the transport system includes one or more diverting stations, of any known type, able to reverse the orientation of a carrier within pneumatic transport tubes.

In a preferred example, the door of the tubular structure of each arrival/departure station has a hinge axis parallel to the axis of the tubular structure. The arrival/departure station also comprises a first actuator for transmitting a rotation to a carrier arranged within the station about the main axis of the carrier, up to a mating condition wherein the side door of the carrier is in an angular position substantially corresponding to the angular position of the door of the tubular structure of the station, and a second actuator for controlling a joint rotation of the door of the tubular structure of the station and of the door of the carrier between their closed position and their open position. The first and second actuators may be of any known type. In particular, the first and second actuators may be of the type described in document EP 4 151 568 B1 of the same Applicant.

Preferably, each arrival/departure station is associated with a device to decelerate a carrier arriving at the arrival/departure station. The same expedient is preferably provided for each diverting station of the pneumatic transport system.

The deceleration device may be of any known type. In particular, such device may be of the type described in document EP 4 151 568 B1 of the same Applicant.

According to a further preferred feature, said interface station has at least one support surface configured to receive and support one or more test tube racks. Each test tube rack and said support surface of the interface station have mutual engagement elements to reference in a determined position each test tube rack on the support surface of the interface station.

In the preferred embodiment, the system comprises at least one electronically controlled automated manipulator for each interface station. Each automated manipulator is preferably a robot having an operating head movable in three mutually orthogonal axes by means of servo-controlled electric motors. The operating head has at least a first grasping device, configured to grasp a single test tube, and a second grasping device, configured to grasp a test tube rack. It is also possible to provide for an automated manipulator configured to manipulate only the test tubes, and a different automated manipulator configured to manipulate only the test tube racks.

In the system according to the invention it is provided an electronic controller, configured to control said at least one automated manipulator and to store the actual position of each test tube rack in said interface station and the actual position of each test tube in each test tube rack located in said interface station.

In the preferred embodiment, the transport system comprises a circuit of pneumatic transport tubes, configured to connect, in an analysis laboratory, a plurality of arrival/departure stations arranged on the same floor and/or on different floors of the analysis laboratory, wherein at least one arrival/departure station is arranged adjacent to a collection center and one or more arrival/departure stations are arranged adjacent to one or more automated transport lines and/or one or more sample processing units.

The invention also relates to the process for transporting and automated handling of test tubes containing biological samples, carried out by means of the system described above.

### Brief description of the figures

Further features and advantages of the invention will result from the following description with reference to the appended drawings, provided purely by way of non-limiting example, wherein:
Figures 1-4 are perspective views of an analysis laboratory using a transport system for test tubes containing biological samples, according to the invention,
Figure 5 is a schematic view illustrating two arrival/departure stations of the system according to the invention,
Figure 6 is a perspective view of a carrier, transportable through the pneumatic transport tubes of a pneumatic transport system, configured to transport test tubes containing biological samples,
Figure 7 is a perspective view of a group of test tubes containing biological samples, arranged within a test tube rack configured to be transported within the carrier of Figure 6,
Figure 8 is a further perspective view of the carrier with a test tube rack shown in a partially removed position,
Figure 9 is a perspective view of a plurality of elastic retaining devices, intended to be associated to the locations of a test tube rack, to removably hold the test tubes within the aforementioned locations,
Figures 10 and 11 are a perspective view and a plan view of an arrival/departure station and an interface station, arranged adjacent to an automated transport line, and
Figures 12-18 are perspective views illustrating different operating conditions of the automated manipulator, arranged for handling test tube racks between the arrival/departure station and the interface station and for handling test tubes between test tube racks, arranged within the interface station, and an automated transport line,
Figure 19 is a further schematic view illustrating the sliding of the carriers in the system according to the invention,

### Detailed description of the invention

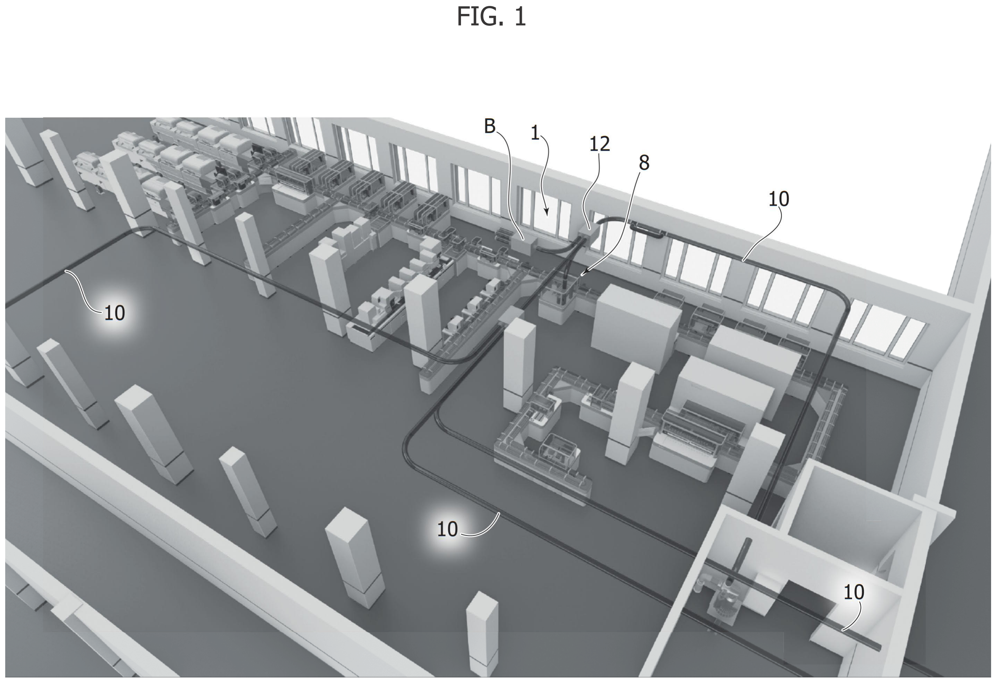

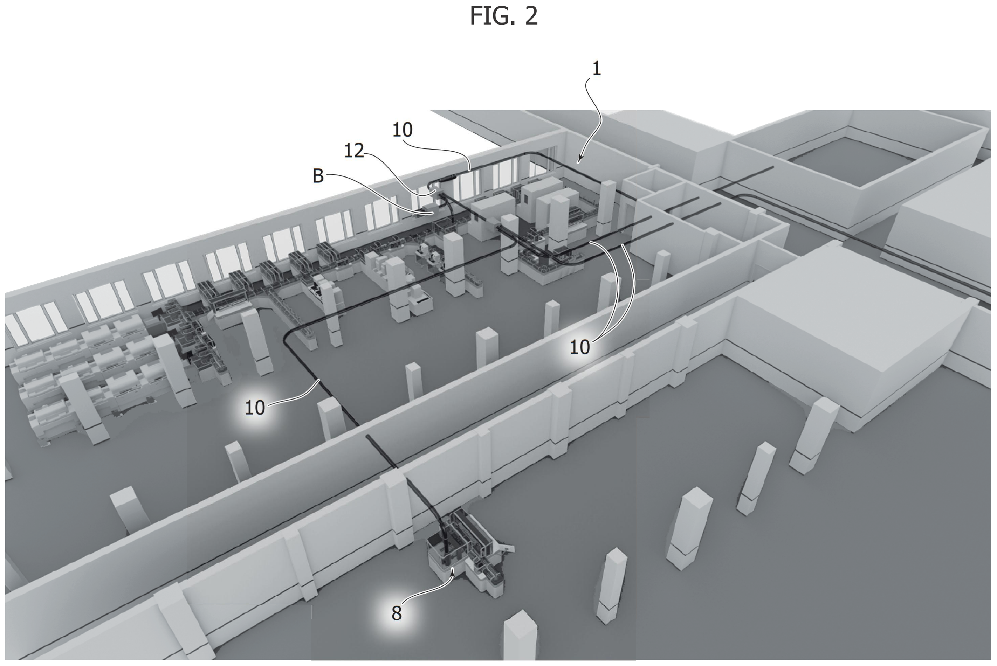

Figures 1-5 show an analysis laboratory, using a system 1 according to the present invention for the pneumatic transport and automated handling of test tubes containing biological samples, such as blood and urine.

In the laboratory, the test tubes containing the biological samples are transported by the pneumatic transport system 1 between different workstations within the laboratory. In particular, the pneumatic transport system preferably connects a collection center with one or more units for processing biological samples and/or with one or more automated lines for the transport of the test tubes containing the samples.

Pneumatic transport systems have been known for a long time. In general, they include pneumatic transport tubes and one or more blowers able to generate a flow of pressurized air within the pneumatic transport tubes, to cause the movement of one or more carriers within the pneumatic transport tubes, in one direction or the other.

The construction details related to the pneumatic transport system, the transport tubes and the blowers are not described or illustrated here, as they can be made in any known way. The elimination of these details from the drawings also makes them quicker and easier to understand.

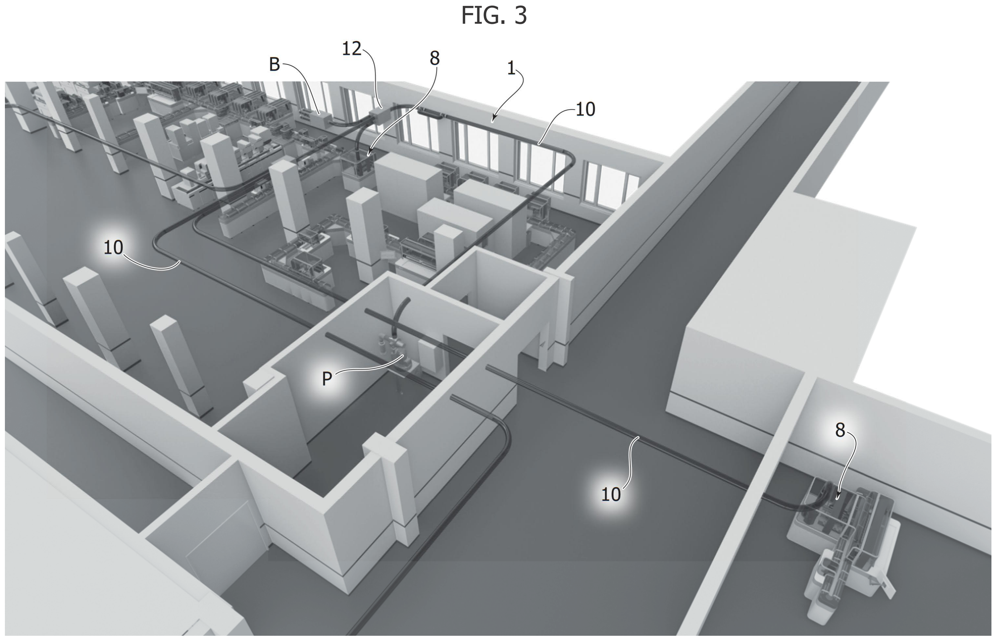

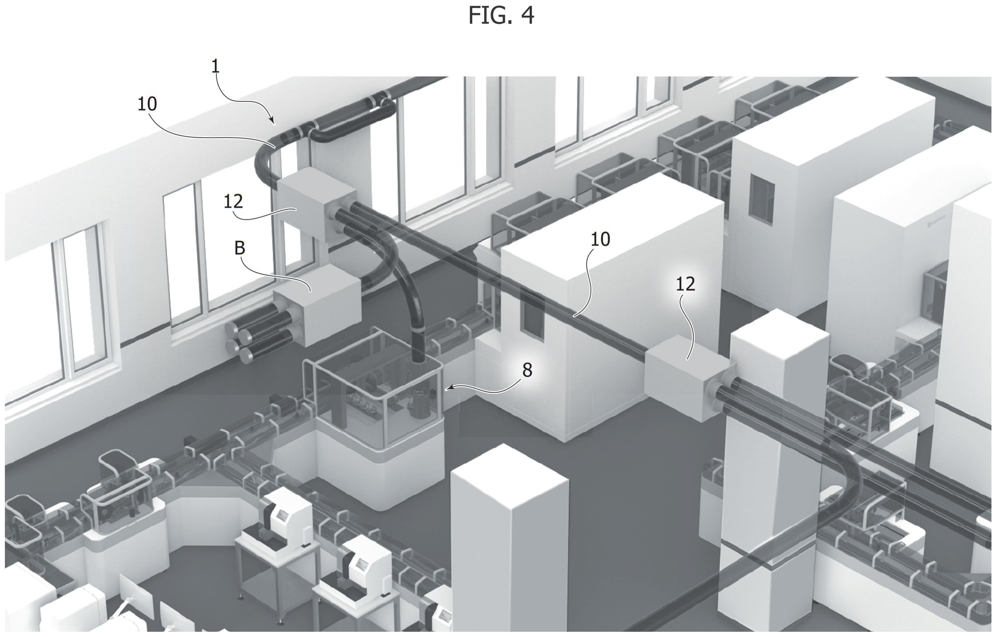

In figures 1-4, number 10 indicates the tubes of the pneumatic transport system 1, in which carriers 2, described in detail below, containing test tubes filled with biological samples are transported. The tubes 10 connect with each other the arrival/departure stations 8 of the carriers 2, which will also be described in detail below. At certain nodal points of the network of tubes 10, there are diverting stations 12, whose function will also be described below. Figure 3 shows a blower P with which the pneumatic transport system is provided. According to the known technique, the blower P is configured to inject pressurized air into a tube 10 to which it is connected, or to suck air from a tube 10 to which it is connected, so as to cause a movement of the carriers 2 which are in the tube, in one direction or the other. With reference to figure 4, the network of tubes 10 also comprises one or more buffer stations B, where a certain number of carriers 2 can be temporarily parked, waiting for each of them to be routed towards a destination station.

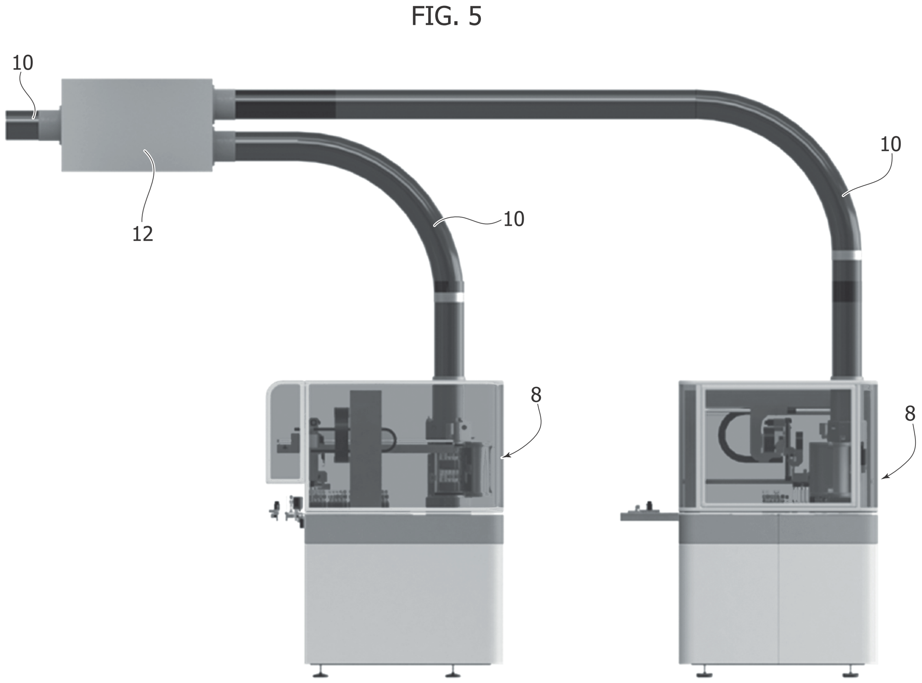

Figure 5 schematically shows two arrival/departure stations 8 connected to two respective pneumatic transport tubes 10, which in turn communicate with a third tube 10 by means of a diverting station 12. As already indicated, the function of the diverting station 12 will be described in detail below. Of course, in a realistic situation, the two stations 8 are far from each other and the tubes 10 extend for the necessary length.

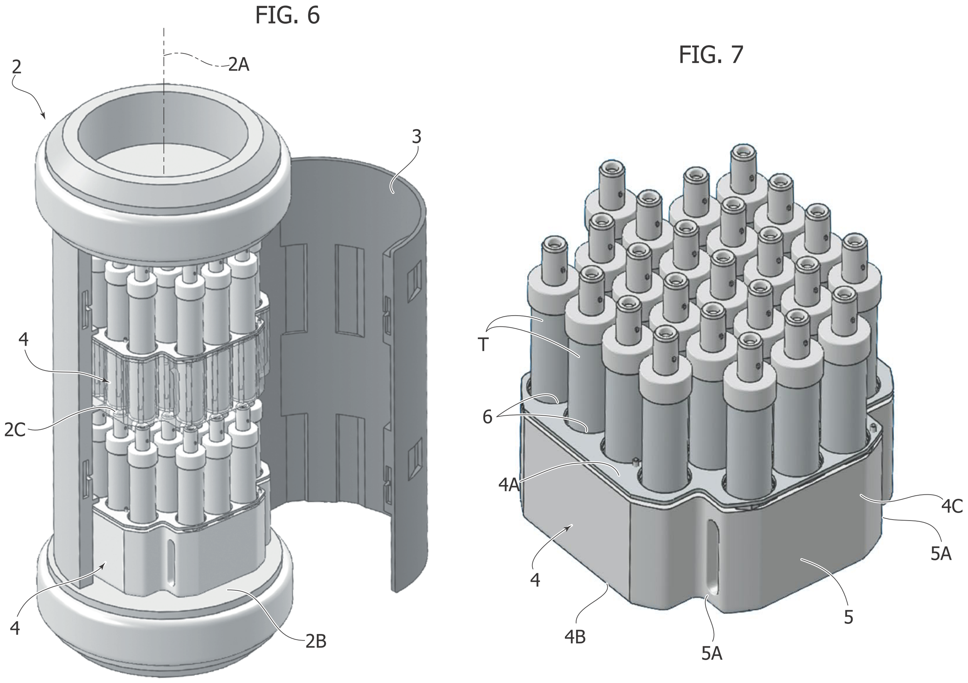

Figure 6 shows an example of a carrier 2 for transporting test tubes through pneumatic transport tubes 10. The carrier 2 is in the form of a substantially cylindrical hollow capsule, defining a main axis 2A, and is provided with a door 3, which is connected in an articulated way to the body of the carrier 2 about a hinge axis (not visible in figure 6) parallel to the main axis 2A and movable in an automated way (as will be described in more detail below) between a closed position, for transporting the carrier 2 through the pneumatic transport tubes 10, and an open position, for access to the inner chamber of the carrier 2.

In the example illustrated in figure 6, the inner chamber of the carrier 2 is provided with a base surface 2B, configured to support a first test tube rack 4 of the type illustrated in figure 7, and a shelf 2C, arranged at mid-height of the inner chamber of the carrier 2, to support a second test tube rack 4. Naturally, the carrier 2 can be configured in any way suitable for transporting one or more test tube racks 4.

In order to securely hold the test tubes during the transport through the pneumatic transport tubes 10, each test tube rack 4 and the inner chamber of each carrier 2 have mutually engaging surfaces, able to keep the test tubes in a stable position within the carrier 2.

With reference to the example illustrated in figure 7, the test tube rack 4 has a top surface 4A, a bottom surface 4B and a perimeter side surface 4C, configured to allow grasping of the test tube rack 4 by a grasping device of an automated manipulator, as will be explained in more detail below.

In the example of figure 7, the perimeter surface 4C defines, at least on one side, a protruding portion 5 of the test tube rack 4, with side surfaces 5A shaped to be grasped by the two jaws of a gripper carried by the automated manipulator, as will be described below.

With reference again to figure 7, the test tube rack 4 has a plurality of locations 6, consisting of cylindrical cavities extending from the top surface 4A and configured to receive and removably hold a plurality of test tubes T.

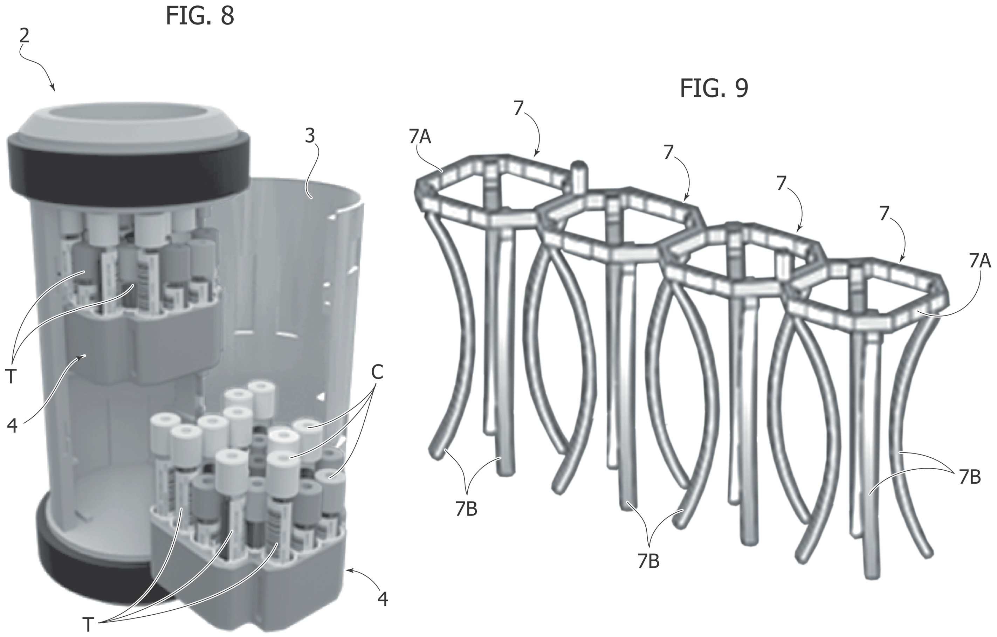

In order to removably hold each test tube T within a respective location 6, each location 6 is provided with an elastic retaining device 7 of a known type. Figure 9 illustrates four identical elastic retaining devices provided for this purpose. Each retaining device 7 is mounted within a respective location 6. In the example, each retaining device 7 preferably has an upper collar 7A of metallic material, from which several elastic lamellae 7B, arched inward, extend downward.

Figure 8 shows again a carrier 2 with the door 3 in the open position and one of the two test tube racks 4 partially removed.

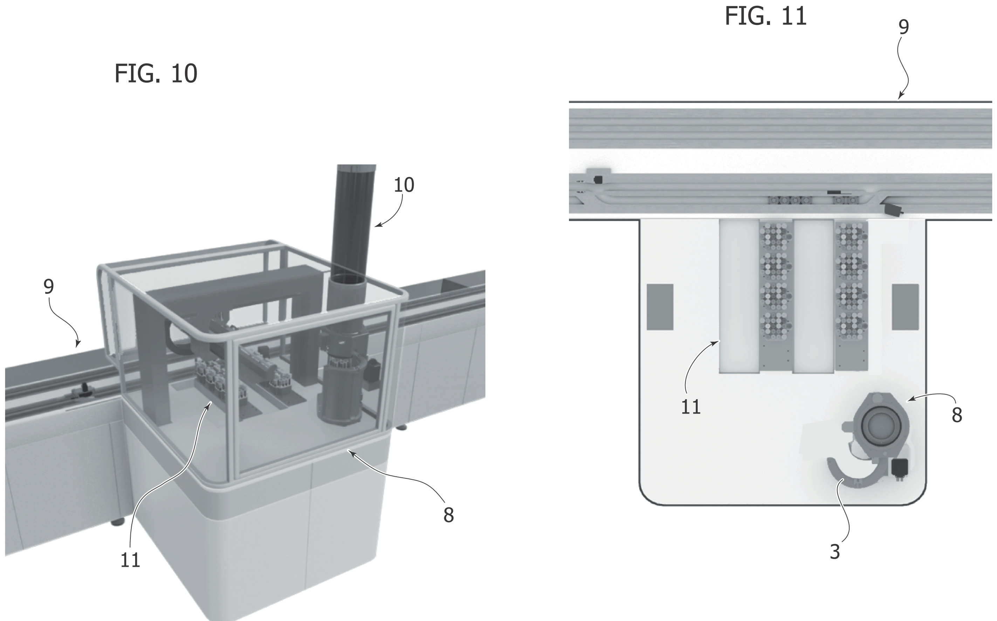

Figures 10, 11 show an arrival/departure station 8 of the pneumatic transport system, arranged adjacent to an automated transport line 9 for transporting the test tubes. An interface station 11, which will be described in detail below, is arranged between the arrival/departure station 8 and the automated transport line 9.

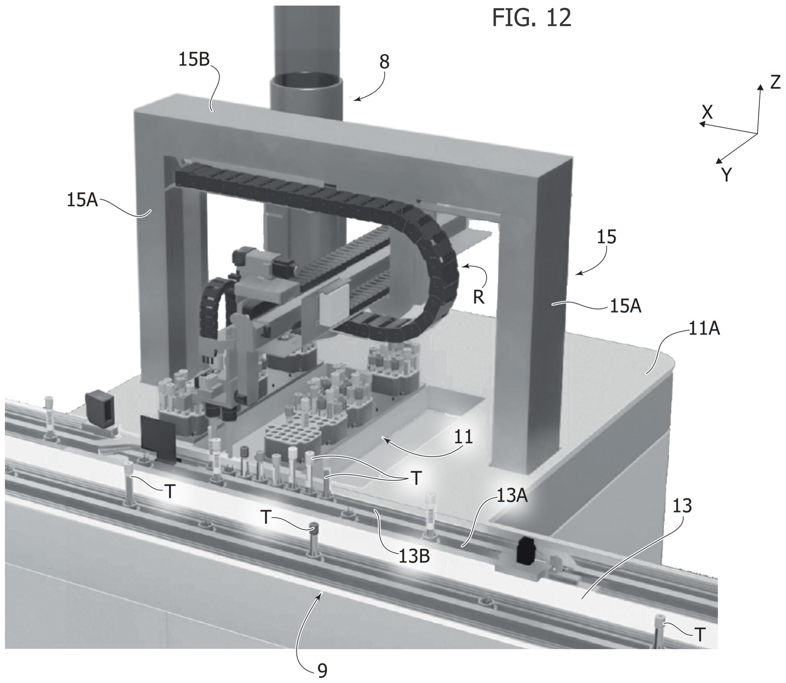

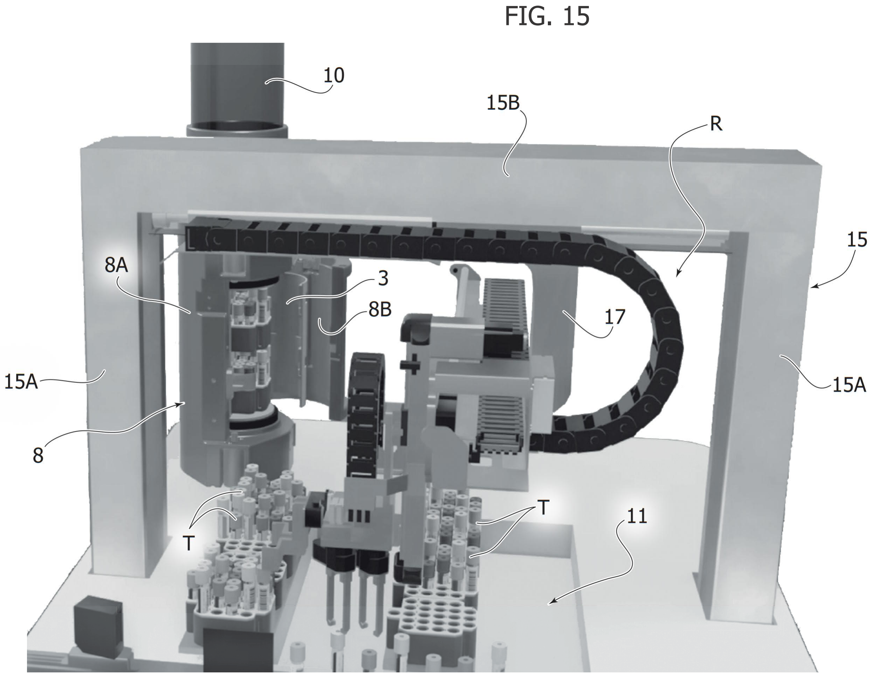

With reference to figures 12-18 and in particular, for example, figure 15, each arrival/departure station 8 forming part of the system according to the invention has a tubular structure 8A, which in the example illustrated here is vertically oriented at the end of a pneumatic transport tube 10 forming part of the pneumatic transport system 1 according to the invention.

The tubular structure 8A of the arrival/departure station 8 has a door 8B, connected in an articulated way to the tubular structure 8A about a hinge axis (not visible in figure 15) parallel to the axis of the tubular structure 8A itself, and movable in an automated way between a closed position and an open position. The door 8B is arranged to be opened when a carrier 2 has arrived within the arrival/departure station 8 and the door 3 of the carrier 2 has been opened.

According to a technique per se known from the previous document EP 4 151 568 B1 of the Applicant, the station 8 comprises a first actuator, for transmitting a rotation to the carrier 2 about its main axis 2A when the carrier has reached the station 8, up to a mating condition wherein the door 3 of the carrier 2 is in an angular position substantially corresponding to the angular position of the door 8B of the station 8. Still according to the aforementioned known technique, the station 8 further comprises a second actuator, for controlling a joint rotation of the doors 8B, 3, about their respective hinge axes, between their closed position and their open position.

Also similarly to what is known from document EP 4 151 568 B1, the arrival/departure station 8 is preferably associated with a device to decelerate a carrier 2 arriving at the station 8, in particular a sensor, located in a position spaced apart from the station 8 and configured to detect the passage of a carrier 2 arriving at the station 8. The electronic controller for managing the transport system is configured to deactivate a blower P of the pneumatic transport system 1 when said electronic controller receives a signal from the aforementioned sensor indicating the passage of a carrier 2 arriving at the station 8.

As indicated, the construction details related to the aforementioned actuating devices and to the deceleration device are not described and illustrated here, as they can be implemented in accordance with the teachings of document EP 4 151 568 B1.

Obviously, since each arrival/departure station 8 is arranged, in the preferred embodiments, with a vertical orientation, it is necessary, in order to ensure the stability of the transported test tubes and the absence of any risk of loss, even partial, of the content of the test tubes, that the test tubes themselves arrive at each arrival/departure station 8 oriented upwards.

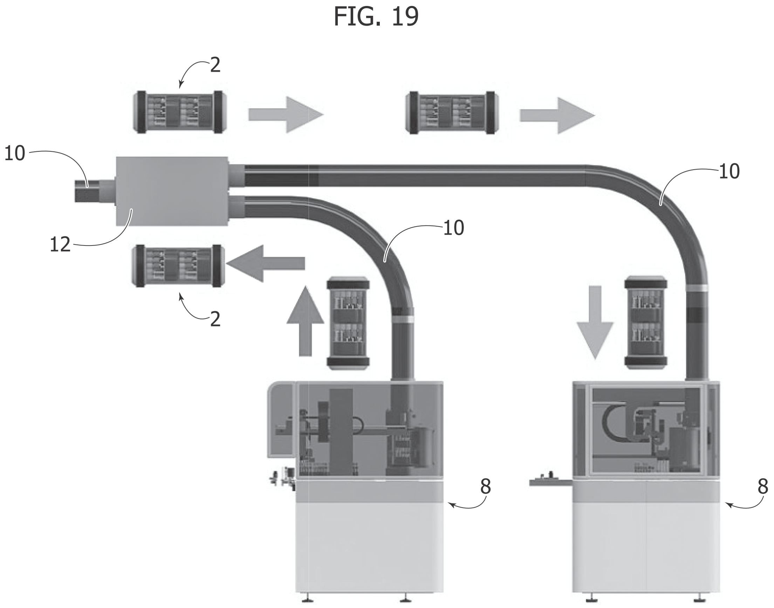

Consequently, each carrier 2 must arrive at a station 8 in such an orientation that the test tubes that it transports just face upwards. To this end, the system 1 according to the invention comprises one or more diverting stations 12 (figures 4, 5), of any per se known type, able to reverse the orientation of a carrier 2 within the pneumatic transport tubes 10. Typically, a diverting station 12 comprises at least one inlet, configured to receive a carrier 2 transported by a first pneumatic transport tube 10 connected to the diverting station 12, and at least one outlet, from which the carrier 2 can exit towards a second pneumatic transport tube 10, after being moved in such a way that in the aforementioned second tube the carrier 2 has as its leading end the end that previously, before the carrier 2 arrived at the diverting station 12, was the tail end (figure 19, in which as already mentioned the two stations 8 can be far from each other and the tubes 10 can extend for the necessary length). Of course, the possibility for the carriers 2 to travel at different moments in one orientation rather than the other within the network of pneumatic transport tubes 10 means that, for each individual diverting station 12, the inlet and outlet can be reversed according to the circumstances.

As already indicated above, the network of tubes 10 also includes one or more buffer stations B (figure 4), where a certain number of carriers 2 can be temporarily parked, waiting for each of them to be routed towards a destination station.

The construction details of the diverting stations 12 and of the buffer stations B are not described or illustrated here, as they can be implemented in any known way. For example, each of said stations can include a revolving cylinder that allows to move a carrier until it is aligned with a specific inlet/outlet of the station.

Preferably, the carrier deceleration device described above, and which is associated with each arrival/departure station 8, is also associated with each diverting station 12 and each buffer station B. In this way, it is possible to transport the carriers 2 containing the test tubes with the biological samples at relatively high speeds, but slowing them down appropriately before the arrival at one of the aforementioned stations, which ensures that the test tubes cannot be damaged during transport and that there can be no loss, even partial, of their content during transport. In the vertical sections of the pneumatic transport tubes 10, the test tubes are always transported facing upwards, thanks as mentioned to the possibility of correspondingly orienting the carriers 2 in the diverting stations 12. In the horizontal sections of the pneumatic transport tubes 10, the test tubes are held in a horizontal position within their respective locations of the test tube racks, which is sufficient to avoid the risk of even partial loss of the content of the test tubes, since each test tube is closed by a cap C (figure 8). It should be noted in particular that the test tubes T housed by the same test tube rack 4 do not necessarily have to be homogeneous, as they may for example have different sizes and/or different types or colors of cap C.

Figure 10 shows, as a whole, the arrival/departure station 8, arranged adjacent to an automated transport line 9 of the test tubes T, with the interface station 11 arranged between the arrival/departure station 8 and the automated transport line 9.

The automated transport line 9 can be of any known type, and in particular can be implemented in accordance with known solutions developed by the Applicant. Such solutions provide for the arrangement of one or more automatic conveyors 13 (figures 12-14), comprising a conveyor belt (not shown) suitable for the flow of transport devices 14 for a single test tube, which are guided along the conveyors 13. Each transport device 14 can be, for example, made in accordance with the teachings of document EP 3 129 791 B1 of the same Applicant.

As can always be seen in figures 12-14, the automatic conveyor 13 of the automated transport line 9 can have a main lane 13A and a secondary lane 13B, arranged parallel to it and along which it is possible to divert test tubes that must be brought within the arrival/departure station 8 for their transport within the pneumatic transport system 1. Even the diverting device arranged to divert test tubes along the secondary lane 13B can be of any known type. It can be, for example, of the type forming the subject of the previous document EP 2 780 724 B1 of the same Applicant.

With reference to figures 12-18, the arrival/departure station 8 and the interface station 11 are served by an automated manipulator R, configured and programmed both to transfer test tubes between the transport devices 14 of the automated transport line 9 and the test tube racks 4 located in the interface station 11, and to transfer the test tube racks 4 between the interface station 11 and the inner chamber of a carrier 2 arranged within the arrival/departure station 8, when the doors 8B, 3, of the station 8 and the carrier 2 respectively, are open.

In the example illustrated here, the aforementioned operations are performed by a single automated manipulator, in the form of a Cartesian robot R having an operating head H which is movable, along three mutually orthogonal axes, by means of servo-controlled electric motors. However, it is possible to provide for any other type of manipulator, as well as more than one manipulator for each interface station 11, so that, for example, while one manipulator transfers test tube racks 4 between the interface station 11 and the arrival/departure station 8, another manipulator transfers test tubes between the test tube racks 4 located in the interface station 11 and the transport devices 14 located in the automated transport line 9, and in particular along the secondary lane 13B.

With reference to the example illustrated in figures 12-18, the manipulator robot R is carried by a stationary gantry structure 15, including two columns 15A connected by an upper crossbar 15B, directed along an X-axis (figure 12) parallel to the longitudinal direction of the automated transport line 9.

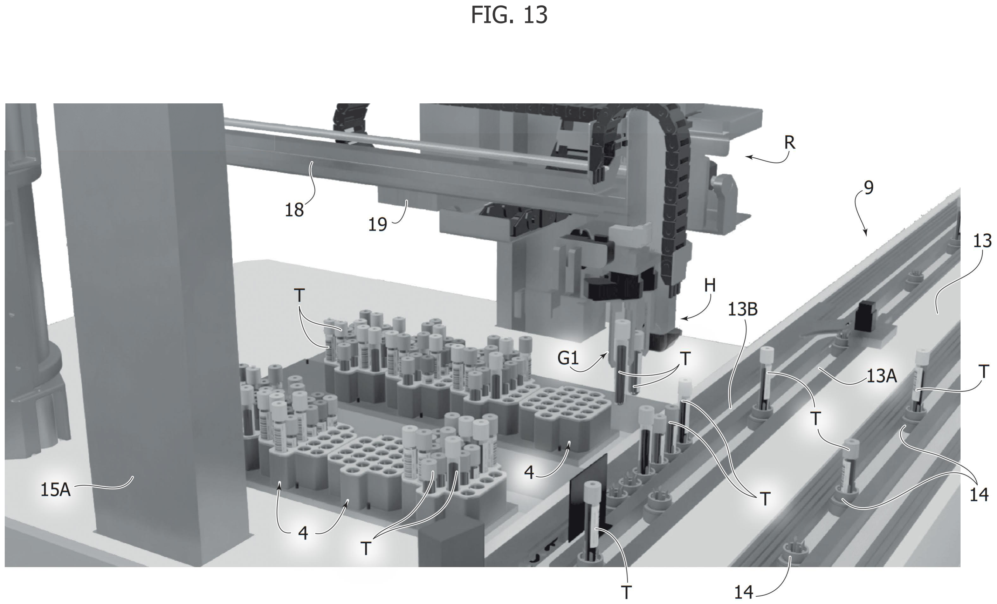

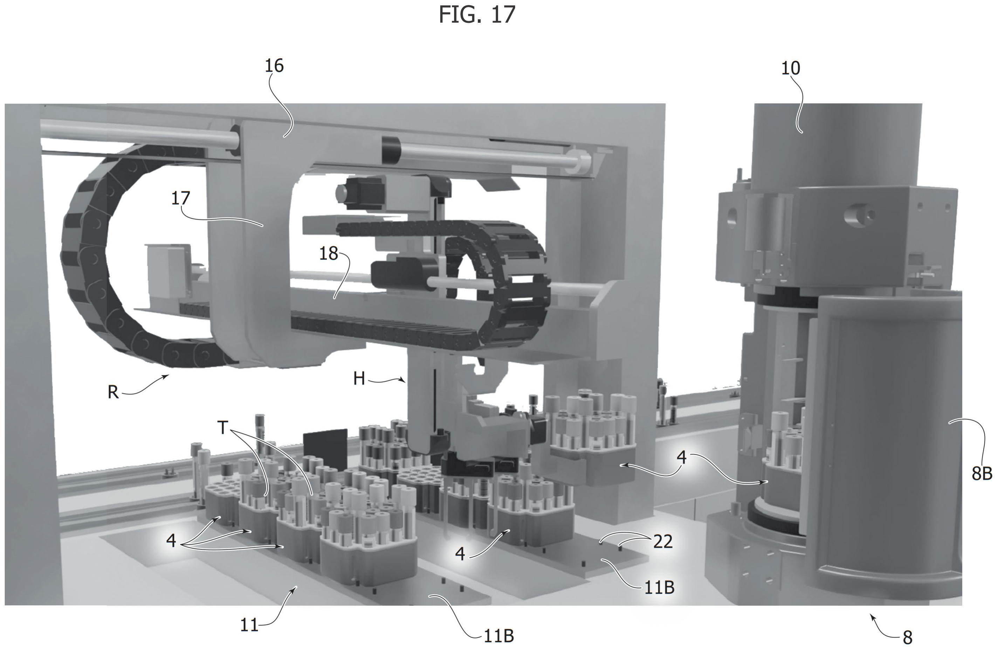

Along the upper crossbar 15B it is mounted, sliding in the X-direction, a carriage 16 (figure 17) which supports, by means of a structure 17 protruding vertically downwards from the carriage 16, a horizontal beam 18 (figure 13) directed along a horizontal Y-axis orthogonal to the X-direction of the automated transport line 9. On the beam 18 it is mounted, sliding along the Y-direction, a carriage 19 which carries the operating head H (figure 13), which in turn can be vertically moved along the Z-direction.

The construction details of the manipulator robot R are not further described or illustrated here, as they can be implemented in any known way. The same applies to the driving systems of the movement of the manipulator robot R along the three axes X, Y, Z. Furthermore, as already indicated, the configuration of the manipulator robot R (or of each manipulator robot intended to serve the arrival/departure station 8 and the interface station 11) can be any.

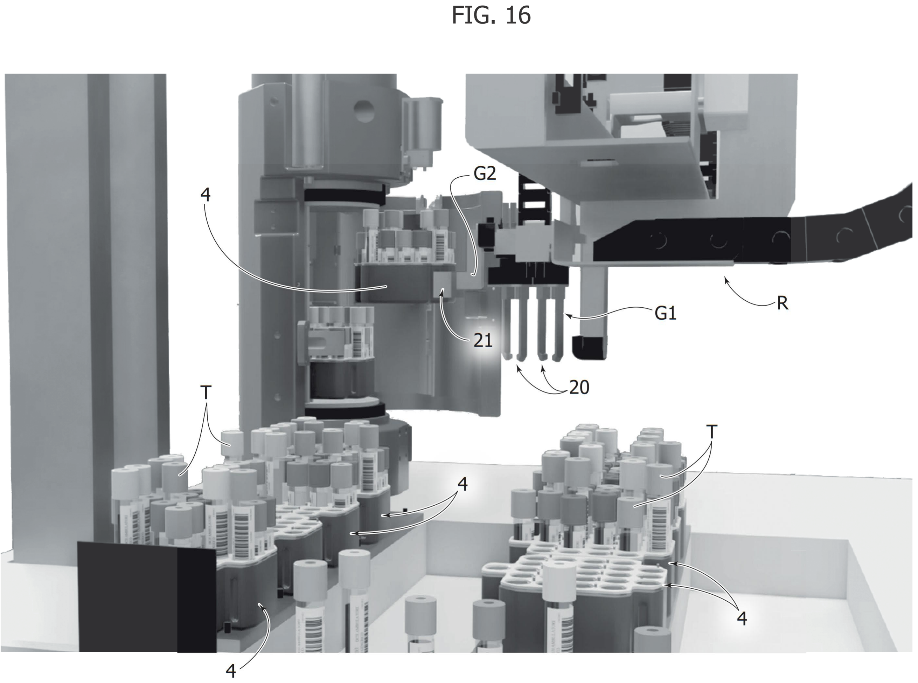

In the embodiment illustrated here, the operating head H is provided with both a first grasping device G1 (figure 13), configured to grasp a single test tube T, and a second grasping device G2 (figure 16), configured to grasp a test tube rack 4. In the example, the first grasping device G1 includes a pair of grippers 20, each designed to grasp a test tube, while the second grasping device G2 includes a single gripper 21 (figure 16), having jaws able to engage the side surfaces 5A of the protruding portion 5 of the test tube rack 4 (figure 7). Even the construction details of the grasping devices G1 and G2 are not described or illustrated here, as they can be of any known type. Typically, each gripper comprises a device for actuating the movement of the gripper between the open the closed condition, controlled electronically by the control system of the robot R according to any predetermined program.

With reference now in particular to figures 12 and 17, the interface station 11 includes a bench 11A, carrying plates defining support surfaces 11B for receiving and supporting the test tube racks 4.

The support surfaces 11B and the lower surfaces of the test tube racks 4 have mutual engagement elements which allow to reference in a determined position each test tube rack 4 on the support surface 11B of the interface station 11. In the illustrated example (figure 17), the surfaces 11B include pegs 22 vertically protruding upwards, configured to engage within complementary holes provided in the lower surface of each test tube rack 4.

Figures 13-18 show a cycle of operations in an example of the execution of the process according to the invention.

Figure 13 shows a step in which the manipulator robot R has picked up two test tubes T from the automated transport line 9, and in particular from the secondary lane 13B of the automatic conveyor 13.

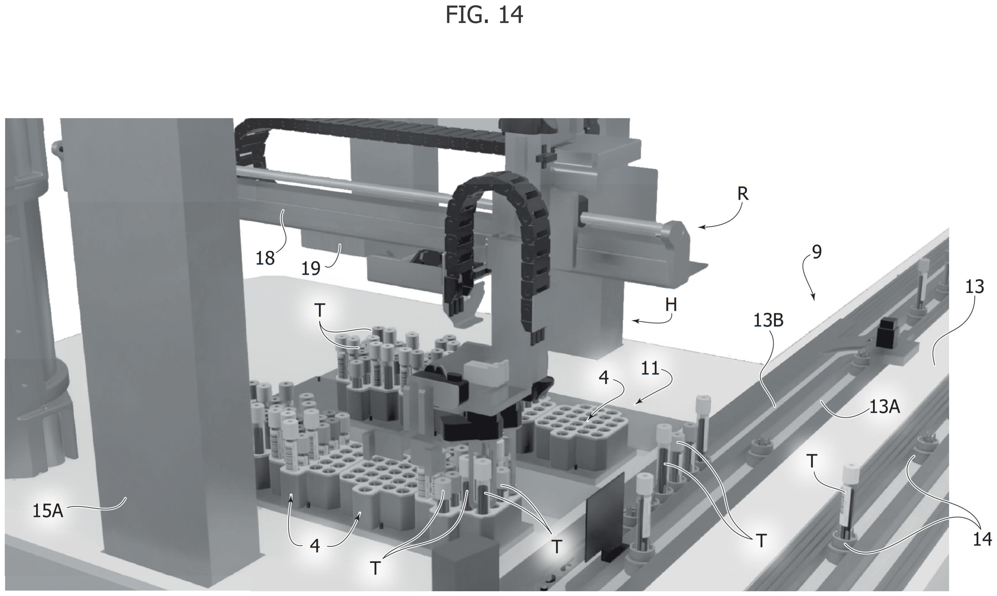

Figure 14 shows a subsequent step in which the manipulator robot R is depositing the test tubes T in two respective locations of a test tube rack 4 located in the interface station 11.

Figure 15 shows a subsequent step in which the robot R is waiting while a carrier 2 is arrived at the arrival/departure station 8 and the doors 3, 8B have been opened to allow the access to the inner chamber of the carrier 2, which contains two test tube racks 4 stacked on top of each other, each with a load of test tubes T.

Figure 16 shows a step in which the manipulator robot R is picking up the test tube rack 4 from the upper compartment of the inner chamber of the carrier 2, in order to then place it in a corresponding position on the interface station 11.

Figure 17 shows a subsequent step in which the manipulator robot R is placing the test tube rack 4 thus picked up in a position of the interface station 11.

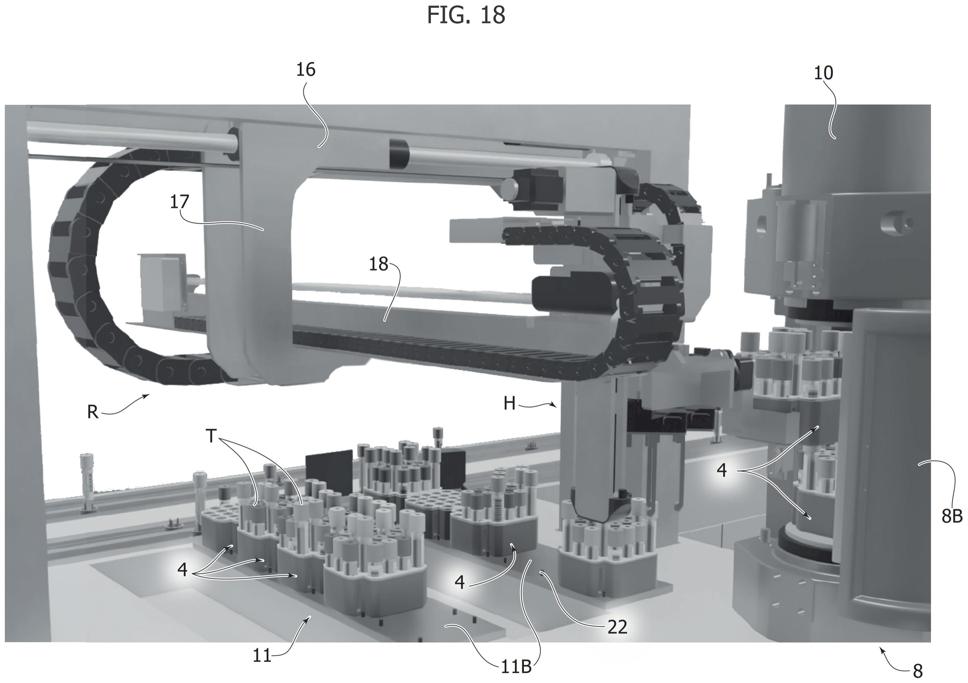

Figure 18 shows a subsequent step in which the manipulator robot R has picked up another test tube rack 4 from the interface station 11 and is about to place it within the upper compartment of the inner chamber of the carrier 2, which had previously been emptied.

With similar operations, the manipulator robot R can remove the test tube rack 4 located in the lower compartment of the inner chamber of the carrier 2 and place it on the interface station 11, then later pick up a further test tube rack 4 from the interface station 11 and place it in the lower compartment of the inner chamber of the carrier 2. At this point, the carrier 2 has received a load of test tubes coming from the automated transport line 9, so the doors 8B, 3 can be closed and the pneumatic transport system can be activated to transport the carrier 2 towards its destination. On the other hand, the pneumatic transport system can also be activated even if the carrier 2 does not necessarily include both the test tube racks 4, neither it is essential that in each of them all the locations 6 necessarily hold a test tube, on the basis of contingent management logic and, in particular, on the possible need to send samples along the pneumatic transport system 1 with particular urgency.

It goes without saying that the manipulator robot R can be controlled to transfer the test tubes T, carried by the test tube racks 4 coming from the arrival/departure station 8, to the automated transport line 9, with reverse operations to those described above with reference to figures 13, 14. The test tubes T, at that point received within transport devices 14 waiting on the automated transport line 9, can be pushed forward along that line, towards their destination.

As mentioned above, there is at least one arrival/departure station 8 adjacent to a collection center, which essentially represents the initial access point for biological samples just collected from patients within the network of tubes 10 of the pneumatic transport system 1.

At this arrival/departure station 8 therefore the following operations, manually performed by an operator, take place: filling with test tubes T of the test tube racks 4, subsequent insertion of the latter into the carrier 2 to be sent in the pneumatic transport system 1 and finally control (preferably by action on a button) of the automatic closure operations of the door 3 of the carrier 2 and jointly of the door 8B of the station, according to the ways already described in the document EP 4 151 568 of the Applicant, to facilitate the introduction of the samples just collected within the network of tubes 10.

As is clear from the above description, the system according to the invention allows the fast transport and fully automated handling of test tubes containing biological samples in a safe and reliable way.

The electronic management system of the transport and handling system is configured to store, at any given moment, the position of each test tube rack and the position of each test tube within a test tube rack. Each test tube and each test tube rack bear an information support, preferably an identification code, which can be detected electronically by any known detection system, which allows to constantly identify and track the path of each sample.

Naturally, without prejudice to the principle of the invention, the embodiments and the construction details may vary widely with respect to what has been described and illustrated, without thereby departing from the scope of protection of the present invention, as defined in the appended claims.

## Claims

1. System (1) for transporting and handling test tubes (T) containing biological samples, comprising:
- one or more pneumatic transport tubes (10),
- a plurality of carriers (2), configured to be pneumatically transported within pneumatic transport tubes (10), and
- one or more arrival/departure stations (8) of carriers (2), each connected to a pneumatic transport tube (10), for loading and/or unloading test tubes (T) containing biological samples,
said system (1) being **characterized in that**:
- each carrier (2) is in the form of a substantially cylindrical hollow capsule, having an internal chamber for transporting test tubes (T) containing biological samples and a door (3) of the carrier with a hinge axis parallel to the main axis (2A) of the carrier (2), movable in an automated way between a closed position, for transporting test tubes (T) containing biological samples through the pneumatic transport tubes (10), and an open position, for loading and/or unloading test tubes (T) containing biological samples into/from the arrival/departure station (8),
- each arrival/departure station (8) has a tubular structure (8A) coaxially connected to said pneumatic transport tube (10) and arranged to receive a carrier (2) arriving or departing from the station (8), wherein the tubular structure (8A) of the station (8) has a station door (8B) which can be moved in an automated way between a closed position and an open position, for access to the inner chamber of a carrier (2) arranged in the station (8) and having the door (3) of the carrier open,
- each carrier (2) is associated with at least one test tube rack (4) having a plurality of locations (6), each configured to removably receive and hold a test tube (T),
- the test tube rack (4) and the inner chamber of the carrier (2) have mutually engaging surfaces, configured to allow the test tube rack (4) to be removably received and held within the inner chamber of the carrier (2),
said system (1) further comprising:
- an interface station (11) between at least one of said arrival/departure stations (8) and an automated line (9) for transporting test tubes (T) or a sample processing unit, said interface station (11) being configured to support at specified positions one or more test tube racks (4), and
- at least one electronically controlled automated manipulator (R), arranged adjacent to said at least one arrival/departure station (8) and to said interface station (11) and configured and programmed to:
- transfer one or more test tubes (T) from said automated transport line (9), or from said sample processing unit, to respective locations (6) of a test tube rack (4) arranged at said interface station (11),
- pick up a test tube rack (4) from said interface station (11), after at least one of the locations (6) of the test tube rack (4) has been filled with a test tube (T), and
- load the test tube rack (4), with the test tubes (T) carried by it, into the inner chamber of a carrier (2) reaching the arrival/departure station (8), after the station door (8B) and the door (3) of the carrier have both been opened,
said at least one electronically controlled automated manipulator (R) being also configured and programmed to:
- pick up a test tube rack (4) from a carrier (2) reaching the arrival/departure station (8), after the station door (8B) and the door (3) of the carrier have both been opened,
- place the test tube rack (4) thus picked up in a determined position in said interface station (11), and
- transfer test tubes (T) from respective locations (6) within the test tube rack (4), which has been placed in said interface station (11), to said automated transport line (9) or said sample processing unit.

2. System (1) according to claim 1, **characterized in that**:
- each test tube rack (4) has a top surface (4A), a bottom surface (4B) and a perimeter side surface (4C),
- the locations (6) for test tubes (T) are cavities extending from the top surface (4A) and each is provided with elastic retaining devices (7) configured to removably hold a test tube (T),
- the perimeter side surface (4C) of each test tube rack (4) is configured to allow grasping of said test tube rack (4) by a grasping device (G2) carried by said at least one automated manipulator (R).

3. System (1) according to claim 1, **characterized in that** each arrival/departure station (8) has said tubular structure (8A) which is vertically oriented and **in that** it comprises one or more diverting stations (12), able to reverse the orientation of a carrier (2) within pneumatic transport tubes (10), so that each carrier (2) can be oriented to arrive at an arrival/departure station (8) with the test tubes (T) facing upwards.

4. System (1) according to claim 1, **characterized in that** the door (8B) of the tubular structure (8A) of each arrival/departure station (8) has a hinge axis parallel to the axis of the tubular structure (8A), and **in that** the arrival/departure station (8) further comprises:
- a first actuator for transmitting a rotation to a carrier (2) arranged within the station (8) about the main axis (2A) of the carrier, up to a mating condition wherein the side door (3) of the carrier (2) is in an angular position substantially corresponding to the angular position of the door (8B) of the tubular structure (8A) of the station (8), and
- a second actuator for controlling a joint rotation of the door (8B) of the tubular structure (8A) of the station (8) and of the door (3) of the carrier (2) between their closed position and their open position.

5. System (1) according to claim 1, **characterized in that** said at least one automated manipulator (R) is a robot, having an operating head (H) movable in three mutually orthogonal axes (X, Y, Z) by means of servo-controlled electric motors, and **in that**
said operating head (H) has at least one first grasping device (G1), configured to grasp a single test tube (T), and a second grasping device (G2), configured to grasp a test tube rack (4).

6. System (1) according to claim 1, **characterized in that** said interface station (11) has at least one support surface (11B) configured to receive and support one or more test tube racks (4) and **in that** each test tube rack (4) and said support surface (11B) of the interface station (11) have mutual engagement elements to reference in a determined position each test tube rack (4) on the support surface (11B) of the interface station (11).

7. System (1) according to claim 1, **characterized in that** it comprises an electronic controller, configured to control said at least one automated manipulator (R) and to store the actual position of each test tube rack (4) in said interface station (11) and the actual position of each test tube (T) in each test tube rack (4) located in said interface station (11), and
wherein, in addition, each test tube rack (4) and each test tube (T) carry an electronically detectable information support.

8. System (1) according to claim 1, **characterized in that** it comprises a circuit of pneumatic transport tubes (10), configured to connect, in an analysis laboratory, a plurality of arrival/departure stations (8) arranged on the same and/or on different floors of the analysis laboratory, and
wherein at least one arrival/departure station (8) is arranged adjacent to a collection center and one or more arrival/departure stations (8) are arranged adjacent to one or more automated transport lines (9) and/or one or more sample processing units.

9. System (1) according to claim 1, **characterized in that** each arrival/departure station (8) is associated with a device to decelerate a carrier (2) arriving at the arrival/departure station (8).

10. System (1) according to claim 3, **characterized in that** each diverting station (12) is associated with a device to decelerate a carrier (2) arriving at the diverting station (12).

11. Process for transporting and handling test tubes (T) containing biological samples,
wherein it is arranged a system (1) for transporting and handling comprising:
- one or more pneumatic transport tubes (10),
- a plurality of carriers (2), configured to be pneumatically transported within pneumatic transport tubes (10), and
- one or more arrival/departure stations (8) of carriers (2), each connected to a pneumatic transport tube (10), for loading and/or unloading test tubes (T) containing biological samples,
said process being **characterized in that**:
- each carrier (2) is in the form of a substantially cylindrical hollow capsule, having an internal chamber for transporting test tubes (T) containing biological samples and a door (3) of the carrier with a hinge axis parallel to the main axis (2A) of the carrier (2), movable in an automated way between a closed position, for transporting test tubes (T) containing biological samples through the pneumatic transport tubes (10), and an open position, for loading and/or unloading test tubes (T) containing biological samples into/from the arrival/departure station (8),
- each arrival/departure station (8) has a tubular structure (8A) coaxially connected to said pneumatic transport tube (10) and arranged to receive a carrier (2) arriving or departing from the station (8), wherein the tubular structure (8A) of the station (8) has a station door (8B) which can be moved in an automated way between a closed position and an open position, for access to the inner chamber of a carrier (2) arranged in the station (8) and having the door (3) of the carrier open,
- each carrier (2) is associated with at least one test tube rack (4) having a plurality of locations (6), each configured to removably receive and hold a test tube (T),
- the test tube rack (4) and the inner chamber of the carrier (2) have mutually engaging surfaces, configured to allow the test tube rack (4) to be removably received and held within the inner chamber of the carrier (2),
wherein the system (1) for transporting and handling further comprises:
- an interface station (11) between at least one of said arrival/departure stations (8) and an automated line (9) for transporting test tubes (T) or a sample processing unit, said interface station (11) being configured to support at specified positions one or more test tube racks (4), and
- at least one electronically controlled automated manipulator (R), arranged adjacent to said at least one arrival/departure station (8) and to said interface station (11),
the process including performing, through said at least one automated manipulator (R), the following operations:
- transfer one or more test tubes (T) from said automated transport line (9), or from said sample processing unit, to respective locations (6) of a test tube rack (4) arranged at said interface station (11),
- pick up a test tube rack (4) from said interface station (11), after at least one of the locations (6) of the test tube rack (4) has been filled with a test tube (T),
- load the test tube rack (4), with the test tubes (T) carried by it, into the inner chamber of a carrier (2) reaching the arrival/departure station (8), after the station door (8B) and the door (3) of the carrier have both been opened,
- pick up a test tube rack (4) from a carrier (2) reaching the arrival/departure station (8), after the station door (8B) and the door (3) of the carrier have both been opened,
- place the test tube rack (4) thus picked up in a determined position in said interface station (11), and
- transfer test tubes (T) from respective locations (6) within the test tube rack (4), which has been placed in said interface station (11), to said automated transport line (9) or said sample processing unit.
